# EUROPEAN PATENT SPECIFICATION

(11) **EP 0 792 211 B1**
(45) Date of publication and mention of the grant of the patent: **21.01.2004**
(21) Application number: 95936695.6
(22) Date of filing: 15.11.1995
(51) Int. Cl.: B32B 27/36

(54) **POLYMERIC FILM**
POLYMERFILM
FILM POLYMERE

(30) Priority: 17.11.1994 GB 9423182
(43) Date of publication of application: 03.09.1997
(73) Proprietor: Dupont Teijin Films U.S. Limited Partnership, Wilmington, Delaware 19805 (US)
(72) Inventor: RAMAGE, William, Cleveland TS15 9SY (GB); CHAPPELL, Simon, Peter, Bedale North Yorkshire DL8 2UD (GB)
(74) Representative: Cockerton, Bruce Roger
(86) International application number: PCT/GB1995/002681
(87) International publication number: WO 1996/015906

(56) References cited:
- EP-A- 0 580 404
- US-A- 4 606 976
- DATABASE WPI Section Ch, Week 9404 Derwent Publications Ltd., London, GB; Class A23, AN 94-031446 & JP,A,05 338 103 ( TORAY IND INC) , 21 December 1993

## Description

This invention relates to a polymeric film and, in particular, to a polymeric film for laminating to metal sheet.

Metal sheet laminated with polymeric materials is known, and used, inter alia, for forming cans such as drawn and wall-ironed cans (known as DWI cans) and drawn and redrawn cans (known as DRD cans).

EP-A-0580404 discloses a biaxially oriented laminated polyester film suitable for laminating onto metal sheet, comprising (A) a first layer formed from a first copolyester having ethylene terephthalate as the main recurring unit, and (B) a second layer formed from a polyester composition containing (B1) a second copolyester having ethylene terephthalate as the main recurring unit and (B2) a third (co)polyester having butylene terephthalate as the main recurring unit and is contained in an amount of 1 to 40% by weight or (B3) a filler having an average particle diameter of 2.5 µm or less and is contained in an amount of 5 to 30% by weight in place of the third (co)polyester (B3), the second layer being to constitute a surface to be bonded onto a metal surface when the laminated film is laminated on metal sheet. The composition is reported as providing metal cans, e.g., beverage cans and food cans, with excellent heat resistance, resistance to embrittlement under retort treatment, flavor retention, impact resistance and anticorrosive properties. US-4606976 discloses a biaxially oriented thermo-fixed multilayer film consisting of thermoplastic polyester materials having different melting points and having an essentially scratch-free surface, characterised in that a cover layer of a polyester B is applied to at least one surface of a base layer of thermoplastic polyester A, said polyester B having a lower melting point than polyester A, such that no scratches longer than 3.0 mm and greater than 10 microns in cross-section are present on the surface of the cover layer. JP-A-05/338103 discloses a multilayer biaxially-oriented polyester film suitable for laminating to metal sheet wherein said film provides improved slip properties and comprises a layer A and a layer B wherein the degree of crystallisation (XA) of layer A is 25 to 50% and the degree of crystallisation (XB) of layer B is 15 to (XA-5)%, and wherein the average surface roughness of layer B is 0.01 to 1.0 µm.

Metal sheet for can making, such as aluminium or tinplate, is laminated with polymeric materials containing white pigments when a can exhibiting a white appearance is required. DWI cans are produced by forming a cup from a sheet of a metal sheet laminated with polymeric material, and forcing a punch into the metal cup in a die to form a can body. Unfortunately the use of prior art white pigmented polymeric materials may result in excessive wear of the punch and/or die, and/or scoring of the resultant can surface.

We have now devised a polymeric film suitable for laminating to metal sheet which reduces or substantially overcomes the aforementioned problem.

Accordingly, the present invention provides a polymeric film comprising a polyethylene terephthalate first layer having a thickness ranging from 1 to 15 µm and having on a first surface thereof an opaque polyester second layer comprising an ethylene terephthalate/ethylene isophthalate copolyester and from 1% to 30% by weight, based on the weight of the polyester second layer, of titanium dioxide particles having a volume distributed median particle diameter in the range of 0.2 to 5 µm, wherein the melting point of the polyester material of the second layer is in the range from 20°C to 60°C less than the melting point of the polyethylene terephthalate of the first layer, provided that
(a) the ratio of the thickness of the second layer to the first layer is in the range from 2 to 10:1;
(b) the second layer has a Transmission Optical Density in the range from 0.2 to 1.5; and
(c) the degree of crystallanity of the second layer is in the range from 33% to 37%.

The invention also provides a method of producing a polymeric film which comprises forming a polyethylene terephthalate first layer having a thickness ranging from 1 to 15 µm and providing on a first surface thereof an opaque polyester second layer comprising an ethylene terephthalate/ethylene isophthalate copolyester and from 1% to 30% by weight, based on the weight of the polyester second layer, of titanium dioxide particles having a volume distributed median particle diameter in the range of 0.2 to 5 µm, wherein the melting point of the polyester material of the second layer is in the range from 20°C to 60°C less than the melting point of the polyethylene terephthalate of the first layer, provided that
(a) the ratio of the thickness of the second layer to the first layer is in the range from 2 to 10:1;
(b) the second layer has a Transmission Optical Density in the range from 0.2 to 1.5; and
(c) the degree of crystallinity of the second layer is in the range from 33% to 37%.

The polyethylene terephthalate of the first layer may be obtained by condensation polymerisation of terephthalic acid with ethylene glycol. By polyethylene terephthalate is meant the homopolymer, and copolymers containing small amounts of units derived from other glycols and diacids, with the proviso that the melting point of the homo- or copolymer is greater 256°C, preferably in the range from 258°C to 265°C, more preferably 259°C to 262°C. The polyethylene terephthalate may contain minor amounts, eg up to 4 mole %, preferably up to 2 mole % of units derived from glycols other than ethylene glycol. Suitable other glycols include 1,3-propanediol, 1,4-butanediol, neopentyl glycol and 1,4-cyclohexanedimethanol. The polyethylene terephthalate preferably contains 100 mole % of terephthalate units. The polyethylene terephthalate is preferably the homopolymer containing 100 mole % of ethylene terephthalate units.

The polyethylene terephthalate film is preferably biaxially oriented by sequential stretching in two mutually perpendicular directions, typically at a temperature in the range from 70 to 125°C, and preferably heat set, typically at a temperature in the range from 150 to 250°C, for example as described in GB-A-838708.

The first layer of a polymeric film according to the invention may be uniaxially oriented, but is preferably biaxially oriented by drawing in two mutually perpendicular directions in the plane of the film to achieve a satisfactory combination of mechanical and physical properties. Formation of the film may be effected by any process known in the art for producing an oriented polyethylene terephthalate film, for example a tubular or flat film process.

In a tubular process simultaneous biaxial orientation may be affected by extruding a thermoplastics polyethylene terephthalate tube which is subsequently quenched, reheated and then expanded by internal gas pressure to induce transverse orientation, and withdrawn at a rate which will induce longitudinal orientation.

In the preferred flat film process a film-forming polyethylene terephthalate is extruded through a slot die and rapidly quenched upon a chilled casting drum to ensure that the polyester is quenched to the amorphous state. Orientation is then effected by stretching the quenched extrudate in at least one direction at a temperature above the glass transition temperature of the polyethylene terephthalate. Sequential orientation may be effected by stretching a flat, quenched extrudate firstly in one direction, usually the longitudinal direction, is the forward direction through the film stretching machine, and then in the transverse direction. Forward stretching of the extrudate is conveniently effected over a set of rotating rolls or between two pairs of nip rolls, transverse stretching then being effected in a stenter apparatus. Polyethylene terephthalate is preferably stretched so that the dimension of the oriented film is from 2.5 to 4.5 times its original dimension in the, or each direction of stretching.

A stretched film may be, and preferably is, dimensionally stabilised by heat-setting under dimensional restraint at a temperature above the glass transition temperature of the film-forming polyethylene terephthalate but below the melting temperature thereof, to induce crystallisation of the polyethylene terephthalate.

The second layer should be capable of forming a heat-seal bond to a metal sheet, by heating to soften the polyester material of the second layer and applying pressure without softening or melting the polyethylene terephthalate of the first layer.

The second layer comprises a copolyester of ethylene terephthalate and ethylene isophthalate, especially in the molar ratios of from 50 to 90 mole % ethylene terephthalate and from 10 to 50 mole % ethylene isophthalate. Preferred copolyesters comprise from 65 to 85 mole %, more preferably 75 to 85 mole % ethylene terephthalate and from 15 to 35 mole %, more preferably 15 to 25 mole % ethylene isophthalate, and especially a copolyester of about 82 mole % ethylene terephthalate and about 18 mole % ethylene isophthalate.

Formation of a polymeric film according to the invention may be effected by conventional techniques, for example by laminating together a preformed first layer and a preformed second layer, or by casting, for example, the first layer onto a preformed second layer. Conveniently, however, formation of a polymeric film is effected by coextrusion, either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a multilayer polymeric film.

The preferred coextruded polymeric film is stretched to effect molecular orientation of the first layer and/or the second layer, and preferably heat-set. Generally, the conditions applied for stretching the polymeric film will induce partial crystallisation of the second layer polymer and it is therefore preferred to heat set under dimensional restraint at a temperature selected to develop the desired morphology of the second layer. Thus, by effecting heat-setting at a temperature below the crystalline melting temperature of the second layer polymer and permitting or causing the polymeric film to cool, the second layer polymer will remain essentially crystalline or semi-crystalline. However, by heat-setting at a temperature greater than the crystalline melting temperature of the heat-sealing polymer, the latter will be rendered essentially amorphous. Heat-setting of a polymeric film comprising a polyethylene terephthalate first layer and a copolyester second layer is conveniently effected at a temperature within a range of from 140 to 200°C to yield a substantially crystalline second layer, or from 200 to 250°C to yield an essentially amorphous second layer. Heat-setting is preferably performed within a range of from 140 to 180°C, more preferably from 145 to 155°C.

In a particularly preferred embodiment of the invention, the making point of the polyester material of the second layer is in the range from 30°C to 55°C, more preferably 40°C to 50°C, and particularly 44°C to 47°C less than the melting point of the polyethylene terephthalate of the first layer. The melting point of the polyester material of the second layer is preferably in the range from 200°C to 240°C, more preferably 205°C to 230°C, and particularly 210°C to 220°C.

In a preferred embodiment of the invention, both the first and second layers are crystalline or semi-crystalline. The first layer preferably has a degree of crystallinity in the range from 30% to 50%, more preferably 35% to 45%, and particularly 38% to 42%. The second layer has a degree of crystallinity in the range from 33% to 37%.

The first layer is preferably transparent by which is meant substantially permeable to visible light. The first layer preferably exhibits a Transmission Optical Density (TOD) (Sakura Densitometer; type PDA 65; transmission mode) in the range from 0.005 to 0.2, more preferably 0.02 to 0.15. and particularly 0.03 to 0.1. The aforementioned TOD values are particularly applicable to a first layer having a thickness of 5 µm. The first layer is preferably essentially unfilled, although relatively small amounts of filler may be present to improve handleability of the film. The first layer preferably comprises less than 2%, more preferably less than 0.5%, and particularly less than 0.25% by weight of filler material, based on the weight of the first layer polyethylene terephthalate. Any inorganic filler present in the first layer is preferably of the non-voiding type. China day is a preferred inorganic filler for use in the first layer. The china clay preferably has an average particle size in the range from 0.1 to 10 µm, more preferably 0.5 to 1.5 µm.

The first layer of a polymeric film according to the invention preferably exhibits a Deformation Index (DI) less than that of the second layer. The DI of the first layer is preferably less than or equal to 4.0%, more preferably less than or equal to 3.5%, and particularly less than or equal to 2.5%.

The second layer is opaque, by which is meant substantially impermeable to visible light. The second layer exhibits a Transmission Optical Density (TOD) (Sakura Densitometer: type PDA 65; transmission mode) in the range from 0.2 to 1.5, more preferably 0.25 to 1.25, particularly 0.35 to 0.75, and especially 0.45 to 0.65. The aforementioned TOD values are particularly applicable to a second layer having a thickness of 20 µm. The second layer is conveniently rendered opaque by incorporation into the polyester material thereof, of an effective amount of an opacifying agent. Suitable opacifying agents include an incompatible resin filler, a particulate inorganic filler or a mixture of two or more such fillers.

By an "incompatible resin" is meant a resin which either does not melt, or which is substantially Immiscible with the polymer, at the highest temperature encountered during extrusion and fabrication of the layer. The presence of an incompatible resin usually results in a voided second layer, by which is meant that the second layer comprises a cellular structure containing at least a proportion of discrete, closed cells. Suitable incompatible resins include polyamides and olefin polymers, particularly a homo- or co-polymer of a mono-alpha-olefin containing up to 6 carbon atoms in its molecule, for incorporation into polyester second layers. Preferred materials include a low or high density olefin homopolymer, particularly polyethylene, polypropylene or poly-4-methylpentene-1, an olefin copolymer, particularly an ethylene-propylene copolymer, or a mixture of two or more thereof. Random, block or graft copolymers may be employed.

The amount of incompatible resin filler present in the second layer is preferably In the range from 2% to 30%, more preferably 3% to 20%, particularly 4% to 15%, and especially 5% to 10% by weight, based on the weight of the second layer polymer.

Particulate inorganic fillers sultable for generating an opaque second layer include conventional inorganic pigments and fillers, and particularly metal or metalloid oxides, such as alumina, silica and titania, and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the second layer polyester.

The particulate inorganic filler comprises titanium dioxide.

Production of a second layer having satisfactory degrees of opacity and preferably whiteness requires that the titanium dioxide, should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is in the range from 0.2 to 5 µm, more preferably 0.4 to 1.5 µm, and particularly 0.8 to 1.2 µm.

The size distribution of the inorganic filler, particularly titanium dioxide, particles is also an important parameter, for example the presence of excessively large particles can result in the film exhibiting unsightly 'speckle', is where the presence of individual filler particles in the film can be discerned with the naked eye. It is preferred that none of the inorganic filler particles incorporated into the second layer should have an actual particle size exceeding 30 µm. Particles exceeding such a size may be removed by sieving processes which are known in the art. However, sieving operations are not always totally successful in eliminating all particles greater than a chosen size. In practice, therefore, the size of 99.9% by number of the inorganic filler particles should not exceed 30 µm, preferably should not exceed 20 µm, and more preferably should not exceed 15 µm. Preferably at least 90%, more preferably at least 95% by volume of the inorganic filler particles are within the range of the volume distributed median particle diameter ± 0.8 µm, and particularly ± 0.5 µm.

Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

The amount of titanium dioxide incorporated into the second layer desirably should be not less than 1% nor exceed 30% by weight, based on the weight of the polyester present in the layer. Particularly satisfactory levels of opacity are achieved when the concentration of filler is in the range from about 5% to 20%, preferably 10% to 15%, and more preferably 12% to 13% by weight, based on the weight of the second layer polyester.

The titanium dioxide particles may be of anatase or rutile crystal form. The titanium dioxide particles preferably comprise a major portion of rutile, more preferably at least 60 % by weight, particularly at least 80 % by weight, and especially approximately 100% by weight of rutile. The particles can be prepared by standard procedures, such as using the chloride process or sulphate process.

In one embodiment of the invention the titanium dioxide particles are coated preferably with inorganic oxides such as aluminium, silicon, zinc, magnesium or mixtures thereof. It is preferred that the coating additionally comprises an organic compound, such as alkanols and fatty acids, preferably having from 8 to 30, more preferably 12 to 24 carbon atoms. Polydiorganosiloxanes or polyorganohydrogensiloxanes, such as polydimethylsiloxane or polymethylhydrogensiloxane are particularly preferred.

The coating is applied to the titanium dioxide particles in aqueous suspension. The inorganic oxides are precipitated in aqueous suspension from water-soluble compounds such as sodium aluminate, aluminium sulphate, aluminium hydroxide, aluminium nitrate, silicic acid or sodium silicate.

The coating layer on the titanium dioxide particles is preferably in the range from 1 to 12%, more preferably 2 to 6% of inorganic oxides, and preferably in the range from 0.5 to 3%, and more preferably 0.7 to 1.5% of organic compound, by weight based upon the weight of titanium dioxide.

If both an incompatible resin filler, preferably a polyolefin, and titanium dioxide are present in the second layer it is preferred that the concentration of the particulate inorganic filler is in the range from 1% to 15%, particularly 2% to 8%, and especially 3% to 7% by weight, based on the weight of the second layer polyester.

The components of the second layer compositions may be mixed together in conventional manner. For example, by mixing with the monomeric reactants from which the second layer polyester is derived, or the components may be mixed with the polyester by tumble or dry blending or by compounding in an extruder, followed by cooling and, usually, comminution into granules or chips. Masterbatching technology may also be employed.

The second layer of a polymeric film according to the invention preferably exhibits a Deformation Index (DI) of greater than or equal to 2.5%, and a preferred layer exhibits a DI of not greater than about 50%. Preferably the second layer exhibits a DI within a range of from 3.5% to 20%, and more preferably 4.0% to 10%. Particularly desirable performance is observed with a DI of 4.5% to 7%. The DI is the deformation, expressed as a percentage of the original thickness of the layer, observed when a film of the layer is subjected, at a temperature of 200°C, to a pressure of 2 megaPascals applied normal to the plane of the sheet by the hereinafter described test procedure (calculating the average value of five measurements).

In a preferred embodiment of the invention, the polymeric film has an average (of the widthwise or transverse direction (TD) and the lengthwise or machine direction (MD)) percentage thermal shrinkage at 150°C in the range from 2% to 20%, more preferably 4% to 15%, and particularly 5% to 10%.

The thickness of a polymeric film according to the invention is preferably in the range from 5 to 400 µm, more preferably 5 to 100 µm, and particularly 12 to 30 µm.

The polymeric film comprises a second layer having a thickness greater than that of the first layer. The ratio of the thickness of the second layer to the first layer is in the range from 2 to 10 : 1, particularly 3 to 7 : 1, and especially 4 to 6 : 1. The thickness of the second layer generally will not exceed 300 µm, and will preferably be in a range from 5 to 80 µm, and more preferably 10 to 25 µm. The thickness of the first layer is in the range from 1 to 15 µm, and especially 2 to 6 µm.

Other additives, generally in relatively small quantities, may optionally be incorporated into the first and/or second layer(s). For example, optical brighteners in amounts up to 1500 parts per million to promote whiteness, and dyestuffs in amounts of up to 10 parts per million to modify colour, the specified concentrations being by weight, based on the weight of the layer polymer(s).

The metal sheet to which the polymeric film according to the invention can be laminated to, is suitably aluminium or steel or alloys thereof. An aluminium sheet is preferably of 0.02 to 0.4 mm thickness, and a steel sheet is preferably of 0.05 to 0.4 mm thickness. The steel may be nickel, zinc or tin plate, black plate, phosphated black plate or electrically chromium coated with both chromium metal and chromium oxide. A suitable method of forming a laminated metal sheet and drawn and wall-ironed (DWI) cans is described in EP-A-0312304, the teaching of which is incorporated herein by reference. In a preferred process, the metal sheet is preheated to a temperature in the range from 140 to 350°C, the polymeric film is positioned on at least one side of the metal sheet (polyester second layer in contact with the metal sheet), and the assembly is passed through nip rolls. The resultant laminate is reheated to a temperature in the range from 260 to 300°C and rapidly quenched in a water bath.

The invention is illustrated by reference to the accompanying drawings in which:
Figure 1 is a schematic sectional elevation, not to scale, of a polymeric film having a first layer and a second layer.
Figure 2 is a similar schematic elevation of a polymeric film with a metal sheet on the remote surface of the second layer.

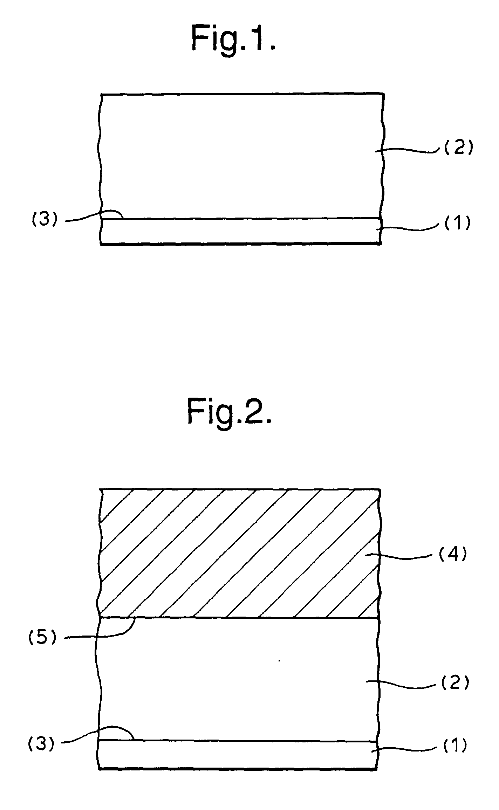

Referring to Figure 1 of the drawings, the polymeric film comprises a first layer (1), having an opaque second layer (2) bonded to the first surface (3) of the first layer (1).

The film of Figure 2 further comprises a metal sheet (4) bonded to the remote surface (5) of the second layer (2).

The invention is further illustrated by reference to the following example.

The following test procedures were used.
1) The deformation index was measured using a thermomechanical analyser, Perkin Elmer, type TMA7, with a test probe having a surface area of 0.785 mm². A sample of the polymeric film was introduced in a sample holder into the TMA7 furnace and allowed to equilibrate at the selected temperature of 200°C. The probe was loaded to apply a pressure of 0.125 megaPascals normal to the planar surface of the hot film sample and the deformation was observed to be zero. The load on the probe was then increased whereby a pressure of 2 megaPascals is applied to the sample. The observed displacement of the probe under the increased load was recorded and expressed as a percentage of the thickness of the undeformed hot sample (under 0.125 megaPascals pressure). That percentage is the Deformation Index (DI) of the tested film material. The procedure was repeated four times with different samples of the same film, and an average value of the five measurements calculated.
2) Film crystallinity was measured by Laser-Raman spectroscopy.
3) Thermal shrinkage was determined by heating strips of film in an oven at 150°C for 30 minutes. The mean percentage change of 5 samples was calculated.

### Example 1

Separate streams of a first layer polymer of polyethylene terephthalate comprising 0.15% by weight of the polymer of china clay of average particle size 0.8 µm, and a second layer polymer of a copolyester of 82 mole % ethylene tereohthalate and 18 mole % ethylene isophthalate comprising 12.5% by weight of the polymer of titanium dioxide of average particle size 1 µm, were supplied from separate extruders to a single channel coextrusion assembly. The polymer layers were extruded through a film-forming die on to a water cooled rotating, quenching drum to yield an amorphous cast composite extrudate. The cast extrudate was heated to a temperature of about 80°C and then stretched longitudinally at a forward draw ratio of 3.2:1. The polymeric film was passed into a stenter oven, where the sheet was dried and stretched in the sideways direction to approximately 3.4 times its original dimensions. The biaxially stretched polymeric film was heat set at a temperature of about 145°C. Final film thickness was 25 µm. The first layer was approximately 4 µm thick and the second layer was approximately 21 µm thick.

The polymeric film exhibited a Transmission Optical Density (TOD) of 0.53, and an average thermal shrinkage at 150°C of 8%. The first layer had a Deformation Index (DI) of 2.1%, and the second layer a DI of 5.1%. The first layer had a degree of crystallinity of 40%, and the second layer a degree of crystallinity of 35%. The melting point of the polyethylene terephthalate of the first layer was 260°C, and the copolyester of the second layer was 215°C.

A metal sheet was laminated with the polymeric film by preheating a metal sheet to a temperature in the range from 200 to 230°C, positioning the polymeric film on one side of the metal sheet (copolyester second layer in contact with the metal sheet), and passing the polymeric film/metal sheet assembly through nip rolls. The resultant laminate was reheated to a temperature in the range from 260 to 300°C and rapidly quenched in a water bath. DWI cans were formed from the laminate. No significant wear of the punch or die used in the can making process was observed. In addition, no scoring of the resultant can surface was observed.

## Claims

1. A polymeric film comprising a polyethylene terephthalate first layer having a thickness ranging from 1 to 15 µm and having on a first surface thereof an opaque polyester second layer comprising an ethylene terephthalate/ethylene isophthalate copolyester and from 1% to 30% by weight, based on the weight of the polyester second layer, of titanium dioxide particles having a volume distributed median particle diameter the range of 0.2 to 5 µm, wherein the melting point of the polyester material of the second layer is in the range from 20°C to 60°C less than the melting point of the polyethylene terephthalate of the first layer, provided that
(a) the ratio of the thickness of the second layer to the first layer is in the range from 2 to 10:1;
(b) the second layer has a Transmission Optical Density in the range from 0.2 to 1.5; and
(c) the degree of crystallanity of the second layer is in the range from 33% to 37%.

2. A method of producing a polymeric film which comprises forming a polyethylene terephthalate first layer having a thickness ranging from 1 to 15 µm and providing on a first surface thereof an opaque polyester second layer comprising an ethylene terephthalate/ethylene isophthalate copolyester and from 1% to 30% by weight, based on the weight of the polyester second layer, of titanium dioxide particles having a volume distributed median particle diameter in the range of 0.2 to 5 µm, wherein the melting point of the polyester material of the second layer is in the range from 20°C to 60°C less than the melting point of the polyethylene terephthalate of the first layer, provided that
(a) the ratio of the thickness of the second layer to the first layer is in the range from 2 to 10:1;
(b) the second layer has a Transmission Optical Density in the range from 0.2 to 1.5; and
(c) the degree of crystallinity of the second layer is in the range from 33% to 37%.

## Patentansprüche

1. Polymerfolie, umfassend eine erste Schicht von Polyethylenterephthalat, die eine Dicke im Bereich von 1 bis 15 µm aufweist und auf einer ersten Oberfläche darauf eine zweite opake Polyesterschicht aufweist, die einen Ethylenterephthalat/Ethylenisophthalat-Copolyester und von 1 Gew.-% bis 30 Gew.-%, bezogen auf das Gewicht der zweiten Polyesterschicht, an Titandioxidteilchen mit einem im Volumen verteilten, mittleren Teilchendurchmesser im Bereich von 0,2 bis 5 µm umfasst, wobei der Schmelzpunkt des Polyestermaterials der zweiten Schicht in dem Bereich von 20°C bis 60°C geringer als der Schmelzpunkt des Polyethylenterephthalats der ersten Schicht liegt, mit der Maßgabe, daß
a) das Verhältnis der Dicke der zweiten Schicht zu der ersten Schicht in dem Bereich von 2 bis 10:1 liegt;
b) die zweite Schicht eine optische Transmissionsdichte in dem Bereich von 0,2 bis 1,5 aufweist, und
c) der Kristallisationsgrad der zweiten Schicht in dem Bereich von 33% bis 37% liegt.

2. Verfahren zum Herstellen einer Polymerfolie, welches das Bilden einer ersten Schicht von Polyethylenterephthalat mit einer Dicke im Bereich von 1 bis 15 µm und das Anordnen auf einer ersten Oberfläche davon einer zweiten opaken Polyesterschicht, umfassend einen Ethylenterephthalat/Ethylenisophthalat-Copolyester und von 1 Gew.-% bis 30 Gew.-%, bezogen auf das Gewicht der zweiten Polyesterschicht, an Titandioxidteilchen mit einem im Volumen verteilten, mittleren Teilchendurchmesser in dem Bereich von 0,2 bis 5 µm, wobei der Schmelzpunkt des Polyestermaterials der zweiten Schicht in dem Bereich von 20°C bis 60°C geringer als der Schmelzpunkt des Polyethylenterephthalats der ersten Schicht liegt, mit der Maßgabe, daß
a) das Verhältnis der Dicke der zweiten Schicht zu der ersten Schicht in dem Bereich von 2 bis 10:1 liegt;
b) die zweite Schicht eine optische Transmissionsdichte in dem Bereich von 0,2 bis 1,5 aufweist, und
c) der Kristallisationsgrad der zweiten Schicht in dem Bereich von 33% bis 37% liegt,
umfaßt.

## Revendications

1. Film polymère comprenant une première couche de poly(téréphtalate d'éthylène) ayant une épaisseur comprise entre 1 et 15 µm et ayant, sur une première surface de celui-ci, une deuxième couche de polyester opaque comprenant un copolyester téréphtalate d'éthylène/isophtalate d'éthylène et de 1% à 30% en poids, par rapport au poids de la deuxième couche de polyester, de particules de dioxyde de titane ayant un diamètre médian de particules distribuées en volume dans la gamme allant de 0,2 à 5 µm, dans lequel le point de fusion de la matière polyester de la deuxième couche est dans la gamme allant de 20°C à 60°C inférieur au point de fusion du poly(téréphtalate d'éthylène) de la première couche, à condition que :
(a) le rapport de l'épaisseur de la deuxième couche à la première couche soit dans la gamme allant de 2 à 10:1 ;
(b) la deuxième couche possède une densité optique par transmission dans la gamme allant de 0,2 à 1,5 ; et
(c) le degré de cristallinité de la deuxième couche est dans la gamme allant de 33% à 37%.

2. Procédé pour produire un film polymère qui consiste à former une première couche de poly(téréphtalate d'éthylène) ayant une épaisseur allant de 1 à 15 µm et à fournir, sur une première surface de celui-ci une deuxième couche de polyester opaque comprenant un copolyester téréphtalate d'éthylène/isophtalate d'éthylène et de 1% à 30% en poids, par rapport au poids de la deuxième couche de polyester, de particules de dioxyde de titane ayant un diamètre médian de particules distribuées en volume dans la gamme de 0,2 à 5 µm, dans lequel le point de fusion de la matière polyester de la deuxième couche est dans la gamme allant de 20°C à 60°C inférieur au point de fusion du poly(téréphtalate d'éthylène) de la première couche, à condition que :
(a) le rapport de l'épaisseur de la deuxième couche à la première couche soit dans la gamme allant de 2 à 10:1 ;
(b) la deuxième couche possède une densité optique par transmission dans la gamme allant de 0,2 à 1,5 ; et
(c) le degré de cristallinité de la deuxième couche soit dans la gamme allant de 33% à 37%.
